# EUROPÄISCHE PATENTANMELDUNG

(11) **EP 3 527 530 A1**
(43) Veröffentlichungstag der Anmeldung: **21.08.2019**
(21) Anmeldenummer: 19000114.9
(22) Anmeldetag: 04.12.2014
(51) Int. Cl.: C01B 3/38, C01B 3/58, C25B 1/04, C10L 3/08, C25B 15/08, H01M 8/0612, C10J 3/00

(54) **VERFAHREN ZUR ENTNAHME VON KOHLENDIOXID AUS DER ATMOSPHÄRE**

(30) Priorität: 11.12.2013 DE 102013020511
(62) Teilanmeldung aus: 14838832.5
(71) Anmelder: Dietrich, Karl-Werner, 51519 Odenthal (DE)
(72) Erfinder: Dietrich, Karl-Werner, 51519 Odenthal (DE)

(57) **Zusammenfassung**

Die vorliegende Erfindung beschreibt ein Verfahren, nach dem Elektrolyse-stämmiger Wasserstoff (Wind- oder Solar-Wasserstoff) mit Synthesegas zu Methan reagiert und Methan in das Erdgasnetz eingeleitet wird. Das eingeleitete Methan oder dessen Äquivalent an Erdgas kann dem Gasnetz entnommen und in einem Reformer wieder in Wasserstoff umgewandelt werden, wobei zusätzlich Kohlendioxid abgetrennt werden kann.

Das Synthesegas wird aus Biomasse erzeugt und das im Reformer gebildete Kohlendioxid wird sequestriert. Somit wird Kohlendioxid, welches die als Biomasse verwendeten Pflanzen in der Vegetationsphase der Atmosphäre entnommen haben, dauerhaft im Boden gespeichert.

## Beschreibung

Wasserstoff ist ein Sekundärenergieträger für erneuerbare Energien. Er kann durch Wasserelektrolyse aus Wind- und Solarenergie gewonnen, im Erdgasnetz gespeichert und transportiert und getrennt oder zusammen mit dem Erdgas in elektrische Energie umgewandelt werden. Wegen des hohen Wirkungsgrades und weil sie auch in der Mobilität eingesetzt werden kann ist die Umwandlung von Wasserstoff in elektrische Energie in einer Brennstoffzelle von besonderem Interesse.

Wegen der physikalische und brandtechnischen Unterschiede zwischen Erdgas und Wasserstoff, welche an den Verbrauchsstellen zu Problemen führen, wird, wie in der WO 2013/043130 "Speicherkraftwerk" beschrieben, der Wasserstoff mit Synthesegas (Kohlenmonoxid + Wasserstoff) in Methan umgewandelt und das Erdgas ähnliche Methan wird in das Gasnetz eingeleitet und dort als erneuerbare Energie gespeichert und transportiert.

Dem Erdgasnetz kann dann das eingespeiste Methan als Erdgas entnommen und wieder in elektrische Energie umgewandelt werden. Zur Verstromung in einer Brennstoffzelle wird das entnommene Erdgas/Methan in einem Dampfreformer wieder in Wasserstoff verwandelt. Bei dem Verfahren wird gemäß der Reaktionsgleichungen 1. und 2. der in der Elektrolyse aus erneuerbarer elektrischer Energie gewonnene Wasserstoff verdoppelt:
1. Reaktion von Synthesegas mit Wasserstoff (CO + H2) + 2 H2 = CH4 + H2O
2. Zerlegung von Methan im Dampfreformer CH4 + 4 H2O = 4 H2 + CO2
Wie man in 1. sieht, werden zur Bildung von Methan mit Synthesegas (CO + H2) 2 Mol Elektrolyse stämmiger Wasserstoff (H2) für 1 Mol Methan benötigt während bei der späteren Zerlegung von Methan/Erdgas im Dampfreformer 4 Mol Wasserstoff erhalten werden.

Gegenstand der vorliegenden Erfindung ist daher die Umsetzung von Synthesegas mit zusätzlichem Wasserstoff, welcher durch Wasserelektrolyse mit elektrischer Energie erhalten wird, zu Methan, Einspeisung von Methan in das Erdgasnetz, Entnahme von dem eingeleiteten Methan äquivalenten Mengen an Erdgas/Methan aus dem Gasnetz, Umsetzung des entnommenen Erdgas/Methan im Dampfreformer zu Wasserstoff und Kohlendioxid und Verwandlung des zuletzt erhaltenen Wasserstoffes in elektrische Energie in einer Brennstoffzelle, wobei dem Synthesegas zur Bildung von 1 Mol Methan 2 Mol Wasserstoff hinzugefügt werden und bei der Rückbildung von Methan zu Wasserstoff im Dampfreformer 4 Mol Wasserstoff erhalten werden.

Hervorzuheben ist, dass hier Elektrolyse stämmiger Wasserstoff als Sekundärenergieträger für erneuerbare Energien in Erdgas ähnliches Methan verwandelt, im Gasnetz transportiert und gespeichert wird und nach Entnahme im Dampfreformer in die doppelte Menge an Wasserstoff umgewandelt wird und danach der Wasserstoff der für ihn optimalen Energieumwandlung in der Brennstoffzelle zugeführt werden kann.

Im Dampfreformer wird neben Wasserstoff auch Kohlendioxid gebildet, das nach seiner Abtrennung entweder gespeichert oder freigesetzt wird. Die Freisetzung von Kohlendioxid führt zu seiner Zunahme in der Atmosphäre. Wird zur Herstellung von Synthesegas Biomasse, z.B. Holz verwendet, so erfolgt die Freisetzung von Kohlendioxid Klima neutral.

Wird das Synthesegas aus Biomasse gewonnen und das beim Reforming gebildete Kohlendioxid gespeichert/sequestriert, so wird das Kohlendioxid, das die als Biomasse verwendete Pflanze in der Vegetationsphase aus der Atmosphäre genommen hat, dauerhaft im Boden gespeichert: Kohlendioxid in der Atmosphäre nimmt nach dem erfindungsgemäßen Verfahren dann proportional zum sequestrierten Biokohlendioxid ab.

Kohlendioxid dient auch als Chemierohstoff und als Speicherstoff für erneuerbare Energien. Dabei wird Wasserstoff mit gespeichertem Kohlendioxid in Methan umgewandelt, das wie oben gezeigt in das Gasnetz eingeleitet wird. Auch die Herstellung von Methanol und Formaldehyd ist möglich.

Zusammengefasst kann das beim erfindungsgemässen Reforming von Methan/Erdgas erhaltene Kohlendioxid:
1. freigesetzt
2. sequestriert
3. gespeichert und zur Rückbildung von Methan oder als Chemierohstoff verwendet werden Wird gemäß 3. Kohlendioxid an Stelle von Synthesegas bei der Methanisierung von Wasserstoff verwendet, so werden je Mol gebildetes Methan 4 Mol Wasserstoff und nicht zwei Mol wie beim Synthesegas verbraucht.

In einer besonderen Ausführungsform dieser Erfindung wird das beim Reforming erhaltene Kohlendioxid gespeichert und mit frischem Erdgas in einer "dry reforming" genannten Reaktion zu Synthesegas umgesetzt, welches erfindungsgemäß erneut mit Elektrolyse-Wasserstoff zu Methan reagiert. D.h., das im Reformer gebildete Kohlendioxid wird im Kreis gefahren.

Das im Reformer gewonnene Kohlendioxid kann auch zum Ort der Rekonstruktion von Methan mit Elektrolyse-Wasserstoff transportiert werden. Sowohl zum Transport als auch zur Speicherung wird Kohlendioxid entweder flüssig in Druckbehältern oder fest als sogenanntes "Trockeneis" in wärmegedämmten Behältnissen aufbewahrt. Festzuhalten ist: Kohlendioxid, das wiederverwendet wird, gelangt nicht in die Atmosphäre! Kohlendioxid kann auch als Gas gespeichert werdem.

Das aus dem Reformer stammende Kohlendioxid eignet sich deshalb zur Weiterverwendung, weil es im Gegensatz zu Kohlendioxid aus der Verbrennung von Kohlenstoffverbindungen leicht abzutrennen ist. Bei der Reaktion von Methan mit Wasserdampf entstehen als Endprodukte nur Kohlendioxid und Wasserstoff, welche einfach zu trennen sind. Entweder durch Druck-Wechselabsorption von Wasserstoff oder durch Druckverflüssigung von Kohlendioxid.

Gegenstand der vorliegenden Erfindung ist daher weiterhin die Umsetzung von Kohlendioxid mit Wasserstoff, welcher durch Wasserelektrolyse mit elektrischer Energie gewonnen wird, zu Methan, die Einspeisung des gebildeten Methan in das Erdgasnetz, Entnahme von Methan oder der äquivalenten Menge an Erdgas aus dem Gasnetz, dessen Umwandlung in Wasserstoff und Kohlendioxid in einem Reformer, Trennung der beiden Gase Wasserstoff und Kohlendioxid, Verwendung des Wasserstoffes zur Energieerzeugung in einer Brennstoffzelle und Rückführung des Kohlendioxids zur erneuten Methanisierung. Das Kohlendioxid kann auch vor der Reaktion mit Wasserstoff mit Erdgas zu Synthesegas reagiert werden. Zur Erinnerung: Bei Kohlendioxid werden 4 Mol Wasserstoff und bei Synthesegas werden 2 Mol Wasserstoff zur Bildung von 1 Mol Methan benötigt.

Die Herstellung des Synthesegases erfolgt nach allen bekannten Verfahren, bei denen Kohlenstoff enthaltende Verbindungen und Materialien unter Anwendung von Hitze und Druck mit Wasserdampf zu einer nahezu äquimolaren Mischung aus Kohlenmonoxid (CO) und Wasserstoff (H2) reagieren.

Soll das bei der Umsetzung von Methan im Reformer gebildete Kohlendioxid freigesetzt werden, so wird als Ausgangsstoff für das Synthesegas Biomasse, z. B. Holz, bevorzugt. Die Emission von Bio-Kohlendioxid ist Klima neutral. Es können auch Material- Mischungen aus biologischem und fossilem Kohlenstoff zur Herstellung von Synthesegas verwendet werden. Den Bioanteil im in das Erdgasnetz eingeleiteten Methan kann man mit der Radiokarbon (C14) Methode nachweisen. Nur der biologische Kohlenstoff enthält C14 (vgl. WO 2013/034130, Seite 18, 1 und 2. Absatz). Wasserstoff wird seit langem als Sekundärenergieträger für fluktuierenden Wind- und Solarstrom angesehen., zumal nur er in einer Brennstoffzelle mit hohem Wirkungsgrad rückverstromt werden -kann. Sein Nachteil ist, dass man für seine Verteilung und Speicherung eine eigene, völlig unabhängige Infrastruktur schaffen muss.

Deshalb wird in der vorliegenden Erfindung der Wasserstoff mit Synthesegas methanisiert und das erhaltene Erdgas ähnliche Methan im Gasnetz gespeichert und Methan zur Rückverstromung in der Brennstoffzelle wieder im Dampfreformer in Wasserstoff umgewandelt.

Von der Patentanmeldung WO 2013/152748, "Speicherkraftwerk" in der ebenfalls Wasserstoff durch Elektrolyse gewonnen und gemeinsam mit Synthesegas zu Methan umgesetzt wird, welches in das Erdgasnetz eingeleitet und somit gespeichert wird, kommt bei der vorliegenden Erfindung hinzu, dass gespeichertes Methan vor seiner Rückverstromung in einem Reformer wieder in Wasserstoff umgewandelt wird, der Wasserstoff zur Stromerzeugung verwendet wird und die Stromerzeugung in einer Brennstoffzelle erfolgt.

Von besonderem Vorteil ist, das im Reformer neben Wasserstoff gebildete Kohlendioxid zur Herstellung von Synthesegas zu verwenden. Dazu wird Kohlendioxid mit der äquimolaren Menge an Methan/Erdgas nach der als "dry reforming" bekannten Reaktion zu Synthesgas umgesetzt. Kohlendioxid gelangt in einen Kreislauf und nicht in die Atmosphäre. Sauberes und kostengünstiges Synthesegas ist in ausreichender Menge zur Verfügung. Es entsteht folgender chemischer Kreislauf, beginnend bei der Rekonstruktion von Methan aus Kohlendioxid:
1. Herst. von Synthesegas CO2 + CH4 = 2(CO+H2)
2. Methanisierung des Elektrolyse-H2 (CO + H2) + 2 H2 = CH4 + H2O
3. Einleiten, Speichern und Verteilen von CH4 im Gasnetz
4. Entnahme und Reformieren von CH4 CH4 + 2H2O = 4H2 + CO2
5. Trennung von H2 und CO2, Erzeugung von Energie mit H2 und Rücktransport von CO2 zum Ort der Reproduktion von Methan.

Bei 1. erfolgt eine Vermehrung an Synthesegas durch hinzukommendes Erdgas. Obiger Kreislauf verbraucht also nur die Hälfte des bei 4. gebildeten CO2 zum Rückbau und so kann in 2. zusätzlich erneuerbares Methan, z.B. für CNG-Kraftstoffe produziert werden.

Bei 4. werden zum eingeleiteten Methan (CH4) äquivalente Mengen an Erdgas aus dem Gasnetz entnommen.

Bei 5. abgetrennter Wasserstoff, H2 kann in regionalen Netzen oder Drucktanks verteilt werden.

Nochmals sei darauf hingewiesen: in dem Kreislauf werden in 2. zwei Mol elektrolysestämmiger Wasserstoff zur Bildung von 1 Mol Methan eingesetzt und in 4. werden im Reformer aus 1 Mol Methan/Erdgas vier Mol Wasserstoff erhalten. Zugesetzt wird in 2. ein Mol Synthesgas, welches in 1. aus ½ Mol Kohlendioxid aus 4. und ½ Mol frischem Methan/Erdgas gewonnen wird.

Als Nebeneffekt der erfindungsgemässen Verfahrensweise wird fluktuierender Wind- und Solarstrom in Form von Erdgas ähnlichem Methan im Gasnetz gespeichert und verteilt. Dies hilft, Überschüsse bei den erneuerbaren Energie abzubauen und so die Stromnetze zu entlasten.

Ebenso wie in "Speicherkraftwerk" wird hier die Effizienz der Elektrolyse durch Zusatz von wohlfeilem Synthesegas zum elektrolysestämmigen Wasserstoff verbessert. In "Speicherkraftwerk" ergibt sich eine Verdoppelung des Wirkungsgrades bei der Rückverstromung, in der vorliegenden Erfindung wird am Ende der Reaktionskette die doppelte Menge an Wasserstoff erhalten.

Ein einfacher Kreislauf mit Rekonstruktion von Methan aus Kohlendioxid wird in der deutschen Patentanmeldung DE102012007136.1 "Rekonstruktion von Methan aus seinen Rauchgasen / Ein chemisches Speicherkraftwerk" beschrieben. In der vorliegenden Erfindung kommt die Zerlegung von Methan in Wasserstoff und Kohlendioxid, Nutzung des Wasserstoffes zur Energieerzeugung und Speicherung sowie Rückführung von Kohlendioxid als zusätzlicher Verfahrensschritt hinzu. Hier wie dort wird Kohlendioxid als chemischer Baustein genutzt und dadurch seine Emission vermieden. Der Vorteil der Rückführung von Methan in Wasserstoff liegt darin, dass Wasserstoff in der Brennstoffzelle wesentlich effizienter in Energie umgewandelt wird als Methan/Erdgas.

Die erfindungsgemässe Rückumwandlung von Methan in Wasserstoff im Dampfreformer mit anschliessender Verstromung in der Brennstoffzelle bewirkt gegenüber der Energieerzeugung durch Verbrennen von Methan/Erdgas vor Allem in Kraftfahrzeugen eine nahezu 100%ige Effizienzsteigerung.

Die vorliegende Erfindung bringt die Mobilität mit der Brennstoffzelle in Reichweite, da der Wasserstoff als Erdgas ähnliches Methan gespeichert, verteilt und trotzdem als solcher genutzt werden kann. Darüber hinaus wird die Effizienz der Elektrolyse, welche die Gesamtkosten des Verfahrens dominiert, verdoppelt. Die Brennstoffzelle ist in der Mobilität der Zukunft deshalb bevorzugt, weil sie die Reichweite der Kraftstoffe mitführenden Verbrennungsmotoren mit der Energie-Effizienz der E-Mobilität verbindet.

## Patentansprüche

1. Verfahren zur Entnahme von Kohlendioxid aus der Atmosphäre, in dem Biomasse aus Pflanzen in Synthesegas überführt wird und Synthesegas mit Wasserstoff, welcher durch Elektrolyse aus Wind- oder Solarstrom erzeugt wird, in Methan überführt wird und Methan in das Erdgasnetz eingeleitet wird und Methan im Erdgasnetz transportiert wird und Methan oder entsprechende Menge an Erdgas dem Gasnetz entnommen wird und das entnommene Methan oder Erdgas in einem Dampfreformer in Wasserstoff und Kohlendioxid zerlegt wird und Kohlendioxid dauerhaft im Boden gespeichert (sequestriert) wird und Kohlendioxid in der Atmosphäre proportional zum sequestrierten Kohlendioxid abnimmt und Wasserstoff, welcher durch Elektrolyse aus Wind- oder Solarstrom erzeugt wird, im Erdgasnetz transportiert wird.

2. Verfahren nach Anspruch 1, in dem Synthesegas als Mischung aus 1 Mol Wasserstoff und 1 Mol Kohlenmonoxid eingesetzt wird und zur Bildung von 1 Mol Methan 2 Mol Wasserstoff hinzugefügt werden und bei der Zerlegung von Methan im Dampfreformer 4 Mol Wasserstoff und 1 Mol Kohlendioxid gebildet werden.

3. Verfahren nach Anspruch 1 und 2, in dem der aus dem Dampfreformer stammende Wasserstoff in einer Brennstoffzelle in elektrische Energie umgewandelt wird

4. Verfahren nach Anspruch 3, in dem die Brennstoffzelle mobil eingesetzt wird.

5. Verfahren nach Anspruch 1 bis 4, in dem fluktuierender Wind- oder Solarstrom im Erdgasnetz gespeichert wird.

6. Verfahren nach Anspruch 1 und 2, in dem als Biomasse Holz verwendet wird

7. Verfahren nach Anspruch 2, in dem Synthesegas aus ½ Mol Kohlendioxid, welches aus dem Reformer stammt, und ½ Mol Methan / Erdgas erzeugt wird.

8. Verfahren nach Anspruch 1, 2 und 7, in dem Kohlendioxid aus dem Reformer zum Transport flüssig in einem Druckbehälter aufbewahrt wird

9. Verfahren nach Anspruch 1, 2 und 7, in dem Kohlendioxid aus dem Reformer zum Transport fest als "Trockeneis" aufbewahrt wird
